# EUROPEAN PATENT APPLICATION

(11) **EP 2 731 339 A1**
(43) Date of publication of application: **14.05.2014**
(21) Application number: 13191988.8
(22) Date of filing: 07.11.2013
(51) Int. Cl.: H04N 19/119, H04N 19/105, H04N 19/176, H04N 19/136, H04N 19/96

(54) **Electronic device and image block merging method**

(30) Priority: 13.11.2012 TW 101142276
(71) Applicant: Hon Hai Precision Industry Co., Ltd., New Taipei City (TW)
(72) Inventor: Lee, Chung-I, New Taipei (TW); Yeh, Chien-Fa, New Taipei (TW); Tang, Ming-Hua, New Taipei (TW)
(74) Representative: Gray, John James

(57) **Abstract**

In a method for merging image blocks for encoding purposes, a largest coding unit (LCU) of an image is obtained, the LCU divided into a plurality of N×N blocks (S10), the N×N blocks examined sequentially (S11), and a determination made as to whether a block merging operation needs to be executed for the LCU according to an average value of pixels of each of the N×N blocks (S14).

## Description

### Field

Embodiments of the present disclosure relate to image coding technology, and particularly to an electronic device and method for merging image blocks using the electronic device.

### BackGround

High efficiency video coding (i.e., HEVC/H.265) is currently used as a video coding method by the Joint Collaborative Team on Video Coding (JCT-VC). One goal of the team is to improve compression performance relative to existing standards - in the range of 50% bit rate reduction for equal perceptual video quality.

In a coding process, an image is divided into a plurality of largest coding units (LCU) having a specified size, and each LCU is divided into a plurality of coding units (CU) blocks having different sizes using a recursive algorithm according to a quad tree structure. An optimized split mode of each CU block is determined when the recursive process is ended. Because all the CU blocks of different sizes in the LCU needs to be tested in the recursive process, thus, the computing time and the complexity of the recursive process is very high. Therefore, a more efficient method for encoding images is desired.

### Summary

According to one aspect of the disclosure, an image block merging method is provided. The image block merging method includes obtaining a largest coding unit (LCU) of an image using a processor of the electronic device, and splitting the LCU into a plurality of N×N blocks. Calculating an average value of pixels of a current N×N block; determining whether a block merging operation needs to be executed for the LCU according to the average value of pixels of the current N×N block, and executing the block merging operation when the block merging operation is needed.

### BRIEF DESCRIPTION OF THE DRAWINGS

FIG. 1 is a block diagram of one embodiment of an electronic device including an image merging system.

FIG. 2 is a schematic diagram of function modules of the image merging system included in the electronic device.

FIG. 3A and FIG. 3B are flowcharts of an exemplary embodiment of a method for merging image blocks using the electronic device.

FIG. 4 is an exemplary schematic diagram of a plurality of N×N blocks split from a largest coding unit (LCU) of an image.

FIG. 5 is an exemplary schematic diagram of merging four N×N blocks of FIG. 4 to one 2Nx2N block.

FIG. 6 is an exemplary schematic diagram of merging four 2Nx2N blocks of FIG. 5 to one 4Nx4N block.

FIG. 7 is an exemplary schematic diagram of merging four 4N×4N blocks of FIG. 6 to one 8Nx8N block.

### DETAILED DESCRIPTION

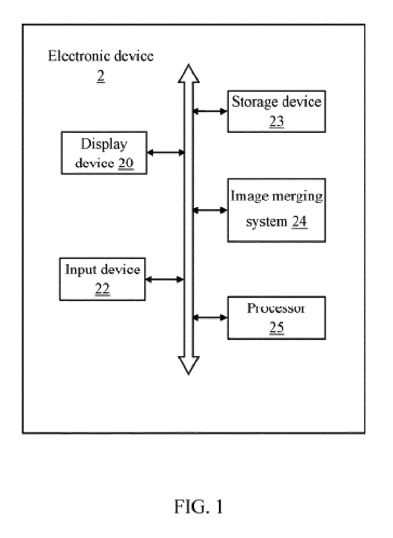

FIG. 1 is a block diagram of one embodiment of an electronic device 2 including an image merging system 24. In the embodiment, the electronic device 2 further includes a display device 20, an input device 22, a storage device 23, and at least one processor 25. The electronic device 2 may be a computer, a smart phone or a personal digital assistant (PDA). FIG. 1 illustrates only one example of an electronic device 2, that may include more or fewer components than illustrated, or have a different configuration of the various components in other embodiments.

The display device 20 displays decoded images, and the input device 22 may be a mouse or a keyboard used to input computer readable data. The storage device 23 may be a non-volatile computer storage chip that can be electrically erased and reprogrammed, such as a hard disk or a flash memory card.

In one embodiment, the image merging system 24 may include computerized instructions in the form of one or more programs that are executed by the at least one processor 25 and stored in the storage device 23 (or memory). A description of the image merging system 24 will be given in the following paragraphs.

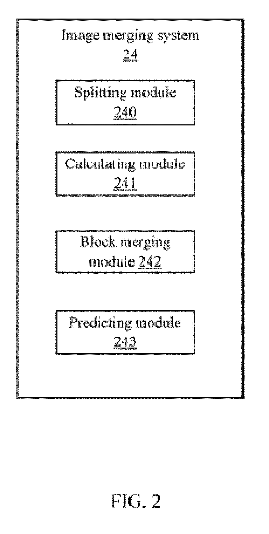

FIG. 2 is a block diagram of function modules of the image merging system 24 included in the electronic device 2. In one embodiment, the image merging system 24 may include one or more modules, for example, a splitting module 240, a calculating module 241, a block merging module 242, and a predicting module 243. In general, the word "module", as used herein, refers to logic embodied in hardware or firmware, or to a collection of software instructions, written in a programming language. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable medium include flash memory and hard disk drives.

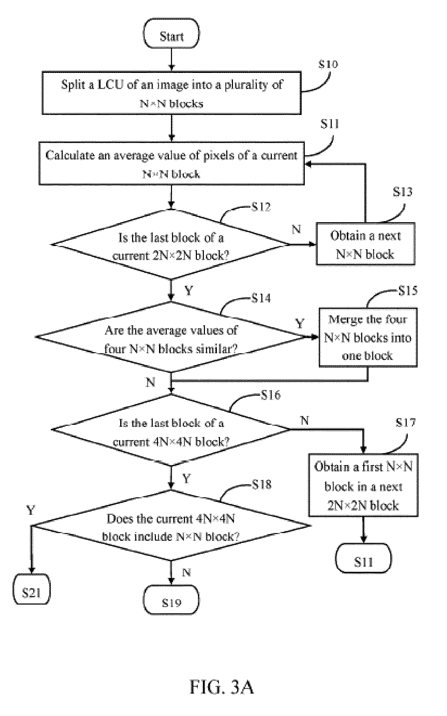

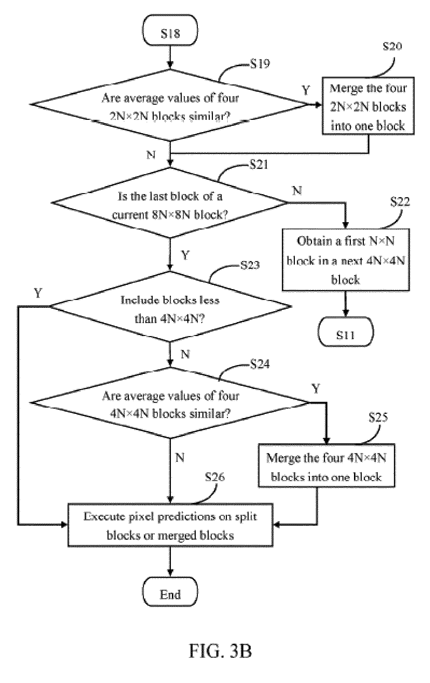

FIG. 3A and FIG. 3B are flowcharts of an exemplary embodiment of a method for merging image blocks using the electronic device 2. Depending on the embodiment, additional steps may be added, others removed, and the ordering of the steps may be changed.

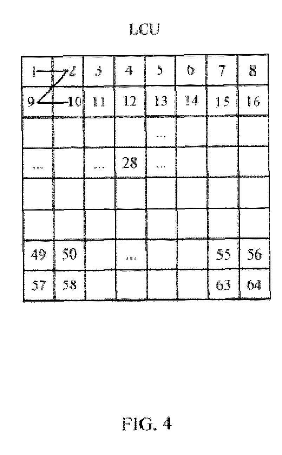

In step S10, the splitting module 240 obtains an image from the storage device 23 or other storage medium, obtains a largest coding unit (LCU) of the image, and splits the LCU into a plurality of N×N blocks. In one embodiment, the image is divided into a plurality of LCUs of a specified size (e.g., 64x64) when the image is encoded. In this embodiment, one LCU of the image is illustrated to be divided, other LCUs of the image may be split using the same method. For example, a number of "N" (e.g., N×N) is equal to eight, and the LCU is divided into sixty-four 8x8 blocks (referring to FIG. 4). In FIG. 4, the serial numbers (e.g., from 1 to 64) of the blocks are numbered according to a sequence from above to down and from let to right. In other embodiment, the serial numbers of the blocks may be numbered according to a Z-shape sequence as shown in FIG. 4.

In step S11, the calculating module 241 calculates an average value of pixels of a current N×N block according to a recursive order in each recursive level. For example, as shown in FIG. 4, the recursive order may be the Z-shape sequence. The average values of pixels of the blocks are used to determine whether a block merging operation needs to be performed on the LCU. In one embodiment, the block merging operation includes a first merging of N×N block (refer to steps S12-S15), a second merging of 2Nx2N block (refer to steps S16-S20) and a third merging of 4Nx4N block (referring to steps S21-S25).

In one embodiment, the average value of pixels of the current N×N block may be an average of luminance (luma) values (e.g., grayscale values) of all the pixels in the current N×N block. In other embodiments, the average value of pixels of the current N×N block may be calculated using chrominance (chroma) values of the pixels. For example, if grayscale is selected as the luminance value, and a value of "N" is equal to eight (N=8), the calculating module 241 processes each 8x8 block to calculate an average of the grayscale values of 64 pixels in each 8x8 block, and determines the average of the grayscale values as the average value of pixels of each 8x8 block.

In step S12, the block merging module 242 determines whether the current N×N block is the last block of a current 2Nx2N block. For example, as shown in FIG. 4, supposing that the current N×N block is the first block, thus the current 2Nx2N block includes four N×N blocks of the first block, the second block, the ninth block, and the tenth block, where the tenth block is the last block of the current 2Nx2N block according to the Z-shape sequence.

If the current N×N block is not the last block of the current 2Nx2N block, step S13 is executed. In step S13, the block merging module 242 obtains a next N×N block from the LCU according to the predetermined sequence (e.g., the Z-shape sequence), determines the next N×N block to be an updated current NxN block, and the procedure returns to step S11.

If the current N×N block is the last block of the current 2Nx2N block, step S14 is executed. In step S14, the block merging module 242 determines whether the average values of pixels of four N×N blocks in the current 2Nx2N block are similar.

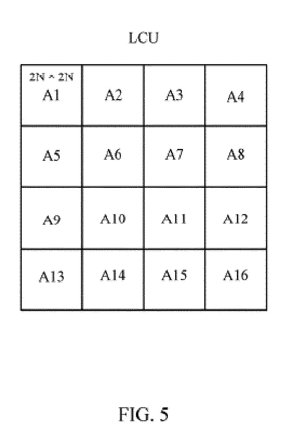

If a deviation from the average values of pixels between every two N×N blocks of the current 2Nx2N block is less than a preset value (e.g., twenty), the block merging module 242 determines that the average values of pixels of the four N×N blocks in the current 2Nx2N block are similar, and step S15 is executed. In step S15, the block merging module 242 executes the first merging of N×N block by merging the four N×N blocks in the current 2Nx2N block into one block (a merged 2Nx2N block). For example, as shown in FIG. 4, when the first merging of 2Nx2N block is executed, the first block, the second block, the ninth block, and the tenth block are merged to generate a 2Nx2N block "A1"(refer to FIG. 5). Then the procedure goes to step S16.

If the deviation from the average values of pixels between two N×N blocks of the current 2Nx2N block is greater than or equal to the preset value, the block merging module 242 determines that the average values of pixels of the four N×N blocks in the current 2Nx2N block are not similar, and step S16 is executed. In step S16, the block merging module 242 determines whether the current N×N block or the merged 2Nx2N block is the last block of a current 4Nx4N block. For example, as shown in FIG. 4, the last block of the current 4Nx4N block is the block "28" according to the Z-shape sequence.

If the current N×N block or the merged 2Nx2N block is not the last block of the current 4Nx4N block, step S17 is executed. In step S17, the block merging module 242 obtains a first N×N block in a next 2Nx2N block from the LCU according to the predetermined sequence (e.g., the Z-shape sequence), determines that the first N×N block in the next 2Nx2N block is an updated current N×N block, and the procedure returns to step S11. For example, as shown in FIG. 4, the next 2Nx2N block includes blocks 3, 4, 11, and 12, thus the updated current N×N block is block 3.

If the current N×N block or the merged 2Nx2N block is the last block of the current 4Nx4N block, step S18 is executed. In step S18, the block merging module 242 determines whether all of the N×N blocks in the current 4Nx4N block are merged to 2Nx2N block by determining whether the current 4Nx4N block includes N×N block.

If the current 4Nx4N block includes N×N block, the block merging module 242 determines that at least one of the N×N blocks in the current 4Nx4N block has not been merged to the 2Nx2N block, and the block merging module 242 determines that there is no need to execute the second merging of 2Nx2N block, and then the procedure goes to step S21.

If the current 4Nx4N block does not include N×N block, the block merging module 242 determines that all of the N×N blocks in the current 4Nx4N block have been merged to the 2Nx2N block, and the procedure goes to step S19. In step S19, the block merging module 242 determines whether the average values of pixels of four 2Nx2N blocks in the current 4Nx4N block are similar.

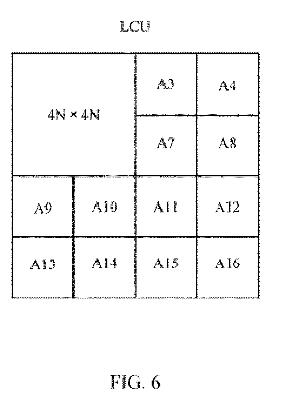

If a deviation from the average values of pixels between every two 2Nx2N blocks of the current 4Nx4N block is less than a preset value (e.g., twenty), the block merging module 242 determines that the average values of pixels of the four 2Nx2N blocks in the current 4Nx4N block are similar, and step S20 is executed. In step S20, the block merging module 242 executes the second merging of 2Nx2N block by merging the four 2Nx2N blocks in the current 4Nx4N block into one block (a merged 4Nx4N block). For example, as shown in FIG. 5, when the second merging of 2Nx2N block is executed, the blocks "A1", "A2", "A5", and "A6" are merged to generate a 4Nx4N block (refer to FIG. 6). Then the procedure goes to step S21.

If the deviation from the average values of pixels between two 2Nx2N blocks of the current 4Nx4N block is greater than or equal to the preset value, the block merging module 242 determines that the average values of pixels of the four 2Nx2N blocks in the current 4Nx4N block are not similar, and step S21 is executed. In step S21, the block merging module 242 determines whether the current N×N block or the merged 4Nx4N block is the last block of a current 8Nx8N block (i.e., the LCU). For example, as shown in FIG. 4, FIG. 5, and FIG. 7, the last block of the current 8Nx8N block is block "64" block "A16" or the bottom right 4Nx4N block according to the Z-shape sequence.

If the current N×N block or the merged 4Nx4N block is not the last block of the current 8Nx8N block, step S22 is executed. In step S22, the block merging module 242 obtains a first N×N block in a next 4Nx4N block from the LCU according to the predetermined sequence (e.g., the Z-shape sequence), determines that the first N×N block in the next 4Nx4N block is an updated current N×N block, and the procedure returns to step S11. For example, as shown in FIG. 4, the updated current N×N block in the next 4Nx4N block is the third block "5".

If the current N×N block or the merged 4Nx4N block is the last block of the current 8Nx8N block, step S23 is executed. In step S23, the block merging module 242 determines whether or not all of the 2Nx2N blocks in the LCU have been merged into the 4Nx4N block by determining whether the current 8Nx8N block includes blocks less than 4Nx4N (e.g., contains an N×N block or a 2Nx2N block). If the current 8Nx8N block includes blocks less than 4Nx4N, the block merging module 242 determines that at least one of the 2Nx2N blocks in the LCU has not been merged to the 4Nx4N block, and the block merging module 242 determines that there is no need to execute the third merging of 4Nx4N block, and then the procedure goes to step S26.

If the current 8Nx8N block includes no blocks less than 4Nx4N, the block merging module 242 determines that all of the 2Nx2N blocks in the LCU have been merged to the 4Nx4N block, and the procedure goes to step S24. In step S24, the block merging module 242 determines whether the average values of pixels of four 4Nx4N blocks in the current 8Nx8N block are similar.

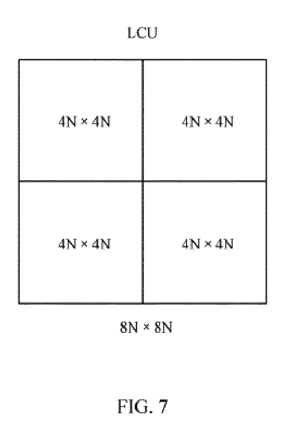

If a deviation from the average values of pixels between every two 4Nx4N blocks of the current 8Nx8N block is less than a preset value (e.g., twenty), the block merging module 242 determines that the average values of pixels of the four 4Nx4N blocks in the current 8Nx8N block are similar, and step S25 is executed. In step S25, the block merging module 242 executes the third merging of 4Nx4N block by merging the four 4Nx4N blocks in the current 8Nx8N block into one block. That is, the LCU does not need to be split. For example, as shown in FIG. 7, when the third merging of 4Nx4N block is executed, the four 4Nx4N blocks are merged into an 8Nx8N block. Then the procedure goes to step S26.

If the deviation from the average values of pixels between two 4Nx4N blocks of the current 8Nx8N block is greater than or equal to the preset value, the block merging module 242 determines that the average values of pixels of the four 4Nx4N blocks in the current 8Nx8N block are not similar, and the block merging module 242 determines that there is no need to execute the third merging of 4Nx4N block, then the procedure goes to step S26.

In step S26, the predicting module 243 executes a pixel prediction for the split blocks of the LCU (e.g. a N×N block of the LCU) or the merged blocks of the LCU (e.g., a merged 2Nx2N block of the LCU). The pixel prediction may be an intra prediction or an inter prediction.

In one embodiment, the predicting module 243 executes the pixel prediction for the split blocks or the merged blocks of the LCU, but does not execute the pixel prediction for all sizes of the blocks including the same N×N block, thus, the number of recursions is reduced and the predicting time and the complexity of the recursive process is reduced, so that a speed of the image encoding is improved. In addition, the small blocks are merged into bigger blocks when the complexity of the image is lower and the color information (e.g., grayscale values) in the blocks of the image are well regulated, so that the predicting number and time are reduced.

In this embodiment, the block merging operation includes a first merging of N×N block (refer to steps S12-S15), a second merging of 2Nx2N block (refer to steps S16-S20) and a third merging of 4Nx4N block (referring to steps S21-S25). In other embodiments, only the first merging of N×N block may be executed, or only the first merging of N×N block and the second merging of 2Nx2N block may be executed.

If only the first merging of N×N block is executed, the method determines whether the current N×N block or the merged 2Nx2N block is the last block of the LCU when a determining result in step S14 is negative (i.e., No), that is, the average values of pixels of the four N×N blocks in the current 2Nx2N block are not similar, or when step S15 has been executed.

If the current N×N block or the merged 2Nx2N block is the last block of the LCU, step S26 is executed. If the current N×N block or the merged 2Nx2N block is not the last block of the LCU, the block merging module 242 obtains a next N×N block from the LCU according to the predetermined sequence (e.g., the Z-shape sequence), determines the next N×N block to be an updated current N×N block, and the procedure returns to step S11.

If only the first merging of N×N block and the second merging of 2Nx2N block are executed, the method determines whether the current N×N block or the merged 4Nx4N block is the last block of the LCU when a determining result in step S18 is positive (i.e. Yes), that is, the current 4Nx4N block includes the N×N block, or where a determining result in step S19 is negative (i.e., No), that is, the average values of pixels of the four 2Nx2N blocks in the current 4Nx4N block are not similar, or when step S20 has been executed.

If the current N×N block or the merged 4Nx4N block is the last block of the LCU, step S26 is executed. If the current N×N block or the merged 4Nx4N block is not the last block of the LCU, the block merging module 242 obtains a next N×N block from the LCU according to the predetermined sequence (e.g., the Z-shape sequence), determines the next N×N block to be an updated current N×N block, and the procedure returns to step S11.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A method for merging image blocks using an electronic device, the method comprising:
obtaining a largest coding unit (LCU) of an image using a processor of the electronic device, and splitting the LCU into a plurality of N×N blocks;
calculating an average value of pixels of a current N×N block; and
determining whether a block merging operation needs to be executed for the LCU according to the average value of pixels of the current NxN block, and
executing the block merging operation when the block merging operation is needed.

2. The method according to claim 1, further comprising:
executing a pixel prediction for split blocks of the LCU or merged blocks of the LCU.

3. The method according to claim 1 or 2, wherein the block merging operation comprising a first merging of N×N block, the first merging of N×N block is executed by:
determining whether the current N×N block is the last block of a current 2Nx2N block;
determining whether the average values of pixels of four N×N blocks in the current 2Nx2N block are similar when the current N×N block is the last block of the current 2Nx2N block;
executing the first merging by merging the four N×N blocks in the current 2Nx2N block into one block when the average values of pixels of the four N×N blocks in the current 2Nx2N block are similar.

4. The method according to claim 3, wherein the average values of pixels of the four N×N blocks in the current 2Nx2N block are determined to be similar when a deviation of the average values of pixels between every two N×N blocks of the current 2Nx2N block is less than a preset value.

5. The method according to claim 3 or 4, wherein the first merging of 2Nx2N block is executed by:
determining that the first merging of N×N block is ended when the average values of pixels of the four N×N blocks in the current 2Nx2N block are not similar.

6. The method according to claim 3, 4, or 5, wherein the block merging operation comprising a second merging of 2Nx2N block, the second merging of 2Nx2N block is executed by:
determining whether the merged block needs to be merged again according to the average value of pixels of the merged block.

7. The method according to claim 6, wherein the second merging of 2Nx2N block is executed by:
determining whether the merged block is the last block of a current 4Nx4N block;
determining whether the current 4Nx4N block comprises N×N block upon the condition that the merged block is the last block of the current 4Nx4N block;
determining whether the average values of pixels of four 2Nx2N blocks in the current 4Nx4N block are similar when the current 4Nx4N block does not comprise N×N block;
executing the second merging by merging the four 2Nx2N blocks in the current 4Nx4N block into one block when the average values of pixels of the four 2Nx2N blocks in the current 4Nx4N block are similar.

8. The method according to claim 7, wherein the second merging of 2Nx2N block is executed by:
determining that the second merging of 2Nx2N blocks is ended when the current 4Nx4N block comprises N×N block or when the average values of pixels of the four 2Nx2N blocks in the current 4Nx4N block are not similar.

9. An electronic device, comprising:
a processor;
a storage device storing a plurality of instructions, which when executed by the processor, causes the processor to:
obtain a largest coding unit (LCU) of an image, and split the LCU into a plurality of N×N blocks;
calculate an average value of pixels of a current N×N block; and
determine whether a block merging operation needs to be executed for the LCU according to the average value of pixels of the current NxN block, and
execute the block merging operation when the block merging operation is needed.

10. The electronic device according to claim 9, wherein the plurality of instructions further comprise:
executing a pixel prediction for split blocks of the LCU or merged blocks of the LCU.

11. The electronic device according to claim 9 or 10, wherein the block merging operation comprising a first merging of N×N block, the first merging of N×N block is executed by:
determining whether the current N×N block is the last block of a current 2Nx2N block;
determining whether the average values of pixels of four N×N blocks in the current 2Nx2N block are similar when the current N×N block is the last block of the current 2Nx2N block;
executing the first merging by merging the four N×N blocks in the current 2Nx2N block into one block when the average values of pixels of the four N×N blocks in the current 2Nx2N block are similar.

12. The electronic device according to claim 11, wherein the average values of pixels of the four N×N blocks in the current 2Nx2N block are determined to be similar when a deviation of the average values of pixels between every two N×N blocks of the current 2Nx2N block is less than a preset value.

13. The electronic device according to claim 11 or 12, wherein the first merging of 2Nx2N block is executed by:
determining that the first merging of N×N block is ended when the average values of pixels of the four N×N blocks in the current 2Nx2N block are not similar.

14. The electronic device according to claim 11, 12, or 13, wherein the block merging operation comprising a second merging of 2Nx2N block, the second merging of 2Nx2N block is executed by:
determining whether the merged block needs to be merged again according to the average value of pixels of the merged block.

15. The electronic device according to claim 14, wherein the second merging of 2Nx2N block is executed by:
determining whether the merged block is the last block of a current 4Nx4N block;
determining whether the current 4Nx4N block comprises N×N block upon the condition that the merged block is the last block of the current 4Nx4N block;
determining whether the average values of pixels of four 2Nx2N blocks in the current 4Nx4N block are similar when the current 4Nx4N block does not comprise N×N block;
executing the second merging by merging the four 2Nx2N blocks in the current 4Nx4N block into one block when the average values of pixels of the four 2Nx2N blocks in the current 4Nx4N block are similar.
